# EUROPEAN PATENT SPECIFICATION

(11) **EP 1 434 643 B1**
(45) Date of publication and mention of the grant of the patent: **03.02.2010**
(21) Application number: 02746714.1
(22) Date of filing: 26.06.2002
(51) Int. Cl.: B01D 53/34, B01D 53/86

(54) **USING SHIFTED SYNGAS TO REGENERATE SCR TYPE CATALYST**
VERWENDUNG VON VERDRÄNGTEM SYNGAS ZUR REGENERATION VON SCR-KATALYSATOR
UTILISATION DE GAZ DE SYNTHESE CONVERTI POUR REGENERER UN CATALYSEUR DE TYPE SCR

(30) Priority: 31.08.2001 US 944091
(43) Date of publication of application: 07.07.2004
(73) Proprietor: GE Energy (USA), LLC, Atlanta, GA 30339 (US)
(72) Inventor: KRANZ, David, R., Katy, TX 77494 (US)
(74) Representative: Nash, David Allan
(86) International application number: PCT/US2002/020295
(87) International publication number: WO 2003/020406

(56) References cited:
- US-A- 4 088 736
- US-A- 5 451 558
- US-A- 5 607 650
- US-A- 5 665 321
- US-A- 5 762 885

## Description

### BACKGROUND OF THE INVENTION

Integrated gasification combined cycle (IGCC) power generation systems are used throughout the world to generate power from the gasification of a fuel source. In such systems, a raw synthesis gas (or syngas) fuel gas stream, comprising H₂, CO, CO₂, and H₂O, is produced by the partial oxidation reaction of a hydrocarbonaceous fuel with a free-oxygen containing gas, typically in the presence of a temperature moderator such as steam, in a quench gasification reactor.

The syngas produced is cooled by quenching in water to produce a stream of quenched saturated syngas at a temperature typically in the range of about 230°C (450°F) to 290°C (550°F) and typically at a pressure of about 48 to 103 bar (700 to 1500 psia). A more detailed description of one such process appears in U.S. Pat. No. 5,345,756.

The syngas produced is then generally cooled to a temperature of 4.5°C (40°F) to 60°C (140°F) and purified in an acid gas removal unit employing a physical or chemical solvent and/or a fixed bed absorption unit to remove impurities, such as H₂S and COS, from the syngas stream. The purified syngas is mixed with a diluent gas, such as nitrogen gas or water vapor, and then fed to the combustor of a gas turbine for power production. The hot combustion gases from the combustor are then sent to an expander/generator that converts the energy released from the combustion gases into electricity. In the combustor, impurities in the syngas produce NOx and SOx gases.

An air and nitrogen integrated IGCC system is usually preferred because of the potential for operation at maximum overall efficiency. Air is compressed in a gas turbine air compressor, usually located along the same shaft as the aforementioned combustion gas expander. A portion of compressed air is combusted with the syngas in the gas turbine combustor. The remaining portion, the extracted air, is cooled against the gas turbine diluent stream and fed to an air separation unit (ASU) that provides oxygen to the gasification step and the nitrogen diluent to the gas turbine.

Finally, waste heat from the gas turbine is then commonly used to produce steam, usually in a heat recovery steam generator (HRSG). In the HRSG heat the hot, expanded combustion gases is used to heat a water stream to produce the steam. The produced steam can be used as the temperature moderator in the gasification unit or to superheat the syngas/diluent feed stream to the gas turbine, with the balance of the steam generally used in a steam turbine for further power production. The cooled combustion gases, including the NOx and SOx gases, are then released into the atmosphere, usually through a stack on the HRSG. Various modifications on this general prior art process can be found in U.S. Pat. Nos. 5,715,671, 5,345,756, 5,117,623 and 5,078,752.

Gasification is an environmentally clean technology, using many types of low value hydrocarbons to produce the syngas. As environmental laws and regulations become more stringent on the emission of harmful gases, such as NOx and SOx, emissions from gasification plants, particularly IGCC plants, may be required to add best available control technology (BACT) in order to receive environmental permitting. Currently, one BACT process is the process set forth U.S. Patent No. 5,451,558 and continuations thereof. This system uses a catalyst/absorber system to reduce the NOx and SOx emissions in a turbine exhaust gas stream to very low levels, commonly less than 5 ppm, without using ammonia as a reactant. In this process, a turbine exhaust stream is contacted with the catalyst/absorber that oxidizes the nitrogen oxides to nitrogen dioxide; oxidizes carbon monoxide to carbon dioxide; and oxidizes sulfur dioxide to sulfur trioxide. The same catalyst/absorber has a second function of absorbing the oxidized pollutants so that the resultant exhaust gas stream is substantially free of harmful pollutants. This was an improvement over previous selective catalytic reduction (SCR) processes that used hazardous ammonia to lower NOx levels, and then could only lower NOx to the range of 5 to 9 ppm.

As described in U.S. Pat. No. 5,599,758, the catalyst/absorber system used to lower NOx and SOx levels can be treated to restore the initial activity or to otherwise substantially improve the activity, by passing a regeneration gas over it. The catalyst/absorber system is contacted with a gaseous stream containing an effectuating amount of reducing agent to remove a portion of the nitrogen oxides. Suitable reducing agents include carbon monoxide, hydrogen and mixtures thereof. The principal component of the gaseous stream is an inert carrier gas such as nitrogen, helium, argon or steam. The reactant gases make up about 500 ppm to 10 percent of the regeneration gas, with the remainder of the regeneration gas being the carrier gas mixture. Several catalyst/absorber beds are used, and are alternated so that regeneration gas is contacted with spent catalyst/absorber beds, leaving the remainder of the beds available to continue to remove contaminants. Thus, the system does not need to be shut down in order to regenerate the catalyst/absorber beds. A process an apparatus for regenerating the catalyst is shown in U.S. Patent No. 5,607,650.

Because the '558, '758, and '650 processes reduce NOx and SOx emissions from gas turbines, those processes would be desirable for use in the HRSG of an IGCC process. The hydrogen requirements for regenerating the catalyst are generally produced from the autothermal reforming of natural gas, as described in US 5,762,885. Some IGCC processes, though, are built in areas where natural gas and hydrogen are not readily available. It would be desirable to develop a process that would integrate the IGCC process with the combined '558 and '758 processes, particularly in areas that lack a supply of natural gas and hydrogen.

### SUMMARY OF THE INVENTION

The present invention integrates a gasification unit into a catalyst/absorber process for removing pollutants from the combustion product of a gas turbine. In a preferred embodiment, a small slipstream of syngas from the gasification unit is cleaned in an acid gas removal unit to remove H₂S. The syngas is then processed in a shift unit where the carbon monoxide and any COS present in the syngas are converted into hydrogen, carbon dioxide, and H₂S. The shifted syngas, still containing trace amounts of H₂S, is then processed in a zinc oxide bed, where the trace H₂S is removed. The resultant stream is hydrogen and carbon dioxide rich, making it ideal for use in regenerating the catalyst/absorber system.

### BRIEF DESCRIPTION OF THE DRAWINGS

FIG. 1 illustrates one preferred embodiment of the present invention, wherein a sweet shift process is used to purify the syngas.
FIG. 2 shows a second preferred embodiment of the present invention, wherein a sour shift process is used to purify the syngas.

### DESCRIPTION OF ILLUSTRATIVE EMBODIMENTS

In the instant invention, carbonaceous fuel is first obtained and prepared for feeding to a gasification reactor. Carbonaceous fuel is any solid, liquid, or gaseous combustible organic material that can be used as feedstock to a gasification process for synthesis gas production. The feedstock for a gasification process is usually a hydrocarbonaceous material, that is, one or more materials, generally organic, which provide a source of hydrogen and carbon for the gasification reaction. The hydrocarbonaceous material can be in a gaseous, liquid or solid state, or in a combination as desired, for example, a solid-liquid composition in a fluidized state.

The feed preparation step may not be necessary, given the composition and physical nature of the feedstock. Generally, solid carbonaceous fuels will need to be liquefied with oil or water prior to feeding to the gasifier. Liquid and gaseous carbonaceous fuels may be suitable for direct feed to the gasifier, but can be pre-treated for removal of any impurities that might be present in the feed.

The term liquid hydrocarbonaceous fuel as used herein to describe various suitable feedstocks is intended to include pumpable liquid hydrocarbon materials and pumpable liquid slurries of solid carbonaceous materials, and mixtures thereof. For example, pumpable aqueous slurries of solid carbonaceous fuels are suitable feedstocks. In fact, substantially any combustible carbon-containing liquid organic material, or slurries thereof may be included within the definition of the term "liquid hydrocarbonaceous." For example, there are:
(1) pumpable slurries of solid carbonaceous fuels, such as coal, particulate carbon, petroleum coke, concentrated sewer sludge, and mixtures thereof, in a vaporizable liquid carrier, such as water, liquid CO₂, liquid hydrocarbon fuel, and mixtures thereof;
(2) suitable liquid hydrocarbon fuel feedstocks to the gasifier, is intended to include various materials, such as liquefied petroleum gas, petroleum distillates and residua, gasoline, naphtha, kerosine, crude petroleum, asphalt, gas oil, residual oil, tar sand oil and shale oil, coal derived oil, aromatic hydrocarbons (such as benzene, toluene, xylene fractions), coal tar, cycle gas oil from fluid-catalytic-cracking operations, furfural extract of coker gas oil, and mixtures thereof;
(3) also included within the definition of the term liquid hydrocarbonaceous are oxygenated hydrocarbonaceous organic materials including carbohydrates, cellulosic materials, aldehydes, organic acids, alcohols, ketones, oxygenated fuel oil, waste liquids and by-products from chemical processes containing oxygenated hydrocarbonaceous organic materials, and mixtures thereof.

Gaseous hydrocarbonaceous fuels that may be burned in the partial oxidation gasifier alone or along with the liquid hydrocarbonaceous fuel includes vaporized liquid natural gas, refinery off-gas, C₁ -C₄ hydrocarbonaceous gases, and waste carbon-containing gases from chemical processes.

After the feed preparation step, if used, the carbonaceous fuel is sent to a gasification reactor, or gasifier. In the gasifier, the carbonaceous fuel is reacted with a reactive free oxygen-containing gas. The term free-oxygen containing gas as used herein means air, oxygen-enriched air i.e. greater than 21 mole % O₂, and substantially pure oxẏgen, i.e. greater than about 90% mole oxygen (the remainder usually comprising N₂ and rare gases). Substantially pure oxygen is preferred, such as that that is produced by an air separation unit (ASU). The partial oxidation of the hydrocarbonaceous material is completed, advantageously in the presence of a temperature control moderator such as steam, in a gasification zone to obtain hot synthesis gas, or syngas. Syngas and synthesis gas can and are used interchangeably throughout this specification.

The need for a temperature moderator to control the temperature in the reaction zone of the gas generator depends in general on the carbon-to-hydrogen ratios of the feedstock and the oxygen content of the oxidant stream. A temperature moderator is commonly used with liquid hydrocarbon fuels with substantially pure oxygen. Water or steam is the preferred temperature moderator. Steam may be introduced as a temperature moderator in admixture with either or both reactant streams. Alternatively, the temperature moderator may be introduced into the reaction zone of the gas generator by way of a separate conduit in the feed injector. Other temperature moderators include CO₂ -rich gas, nitrogen, and recycled synthesis gas.

A gasification reactor generally comprises a reaction zone, made up of a vertical cylindrically shaped steel pressure vessel lined with refractory, and a quench chamber, such as shown in U.S. Pat. No. 2,809,104, which is incorporated herein by reference. A feed injector, such as shown in U.S. Pat. No. 2,928,460, which is incorporated herein by reference, may be used to introduce the feed streams into the reaction zone. In the reaction zone of a gasifier, the contents will commonly reach temperatures in the range of about 927°C (1,700°F) to (3,000°F) 1649°, and more typically in the range of about 1093°C (2,000°F) to 1538°C (2,800° F). Pressure will typically be in the range of about 101 kPa (1 atmospheres) to about 25331 kPa (250 atmospheres), and more typically in the range of about 1520 kPa (15 atmospheres) to about 15,199 kPa (150 atmospheres), and even more typically in the range of about 6080 kPa (60 atmospheres) to about 8106 kPa (80 atmospheres). See US Patent 3,945,942 describing a partial oxidation feed injector assembly. See US Patent 5,656,044 describing a method and an apparatus for the gasification of organic materials. See also US Patents 5,435,940, 4,851,013, and 4,159,238 describing a few of the many gasification processes known in the prior art. The entire disclosures of the above referenced patents are hereby incorporated by reference and relied upon.

The hot gasification process product synthesis gas, or syngas, comprises carbon monoxide and hydrogen. Other materials often found in the synthesis gas include hydrogen sulfide, carbon dioxide, ammonia, cyanides, and particulates in the form of carbon and trace metals. The extent of the contaminants in the feed is determined by the type of feed and the particular gasification process utilized as well as the operating conditions. In any event, the removal of these contaminants is preferable to make gasification a viable process, and acid gas (e.g. CO₂ and H₂S) removal is very advantageous.

As the synthesis gas is discharged from the gasifier, it passes into the gasification quench chamber for cleaning. The turbulent condition in the quench drum, caused by large volumes of gases bubbling up through the water helps the water to scrub much of the solids from the effluent gas. Large quantities of steam are generated within the quench vessel and saturate the syngas stream. The stream of raw gas is cooled in the quench drum and leaves at a temperature in the range of about 175°C to 315°C (350°F to 600°F), such as about 230°C to 290°C (450°F to 550°F), and a pressure in the range of about 34 to 172 ter (500 to 2500 psia), such as about 69 ter (1000 psia). Advantageously, fresh quench water is a mixture of make-up water and condensate produced subsequently in the process.

The syngas can optionally be subjected to further cooling and cleaning operations involving a scrubbing technique wherein the syngas is introduced into a scrubber and contacted with a water spray which further cools the syngas and removes particulates and ionic constituents from the synthesis gas. The initially cooled gas is then treated to desulfurize the gas prior to utilization of the synthesis gas.

The synthesis gas is then sent to an acid gas removal unit so that a substantial portion of the H₂S and other sulfur impurities in the syngas can be removed. The acid gas removal facilities for the synthesis gas, usually employing amine or physical solvents, removes the acid gases, particularly hydrogen sulfide, from the mixed synthesis gas/purge gas stream. The acid gas removal facilities typically operate at low temperatures. After the synthesis gas is cooled to below about 130° C, preferably below about 90° C, the contaminants in the gas, especially sulfur compounds and acid gases, can be readily removed. The synthesis gas is contacted with the solvent in an acid gas removal contactor. The contactor may be of any type known to the art, including trays or a packed column. Operation of such an acid removal contactor is known in the art. Hydrogen sulfide from the acid gas removal unit is usually routed to a sulfur recovery process, with any recovered carbon dioxide being vented to the atmosphere.

The syngas can then be utilized for power generation. The syngas is usually superheated, and then combusted. The combusted gas is expanded to produce power by an electric generator driven by an expansion turbine. The heating value and the composition of the syngas is an important consideration when using it for power production. Thus, additional high heating value fuel, such as natural gas, may need to be added to the syngas to increase the heating value of the combustor feed stream.

Supplementing the syngas gas turbine fuel with a non-combustible gas heat carrier, or diluent gas, to carry waste heat into the gas turbine will increase gas turbine efficiency. Such non-combustible heat carrier can be a gas such as nitrogen or carbon dioxide, or water vapor either evaporated into the fuel gas in a saturator device or injected directly as steam. The non-combustible gas also provides other benefits such as a lowering of flame temperature and reducing NOₓ formation. Due to the introduction of saturated N₂ and saturated fuel gas, the concentration of oxides of nitrogen (NOₓ) in the exhaust gas is substantially nil, below 20 ppm (vol) on dry 15% O₂ basis. The nitrogen is usually superheated to a temperature similar to that of the synthesis gas feed to the combustor.

Air is also commonly added to the combustor feed stream. The air is compressed by means of a turbocompressor that is driven by the coaxial expansion turbine that, along with the combustor, are the principal parts of the gas turbine. The compressed air enters the combustor at a temperature in the range of about 425°C to 455°C (400°F to 850°F) and at substantially the same pressure as syngas and diluent gas. A portion of compressed air can provide feed air to an air separation unit (ASU) that in turn provides oxygen to the gasification step and nitrogen diluent to the gas turbine. Before being fed to the ASU, though, a portion of the compressed air ASU feed can be used to heat the nitrogen diluent stream to its deisred temperature.

The ASU is used to separate air into separate streams of substantially pure oxygen gas and nitrogen gas. A portion or all of the nitrogen gas is saturated with water, slightly superheated, and introduced into the combustor of a gas turbine along with the stream of syngas. The stream of oxygen gas from the ASU is usually introduced into the reaction zone of the partial oxidation gas generator by way of one passage in an annulus-type feed injector.

The hot exhaust gas leaving the expansion turbine portion of the gas is then passed through a conventional heat recovery steam generator (HRSG). Steam for operating a conventional steam turbine comprising a high pressure expansion turbine in tandem with a coaxial intermediate expansion turbine, and steam for process needs, is produced in the HRSG. For example, superheated high pressure steam from the HRSG can be introduced into a high pressure expansion turbine (HPT) for power production. Intermediate pressure exhaust steam leaves the HPT and can also be superheated in the HRSG, and introduced into an intermediate pressure expansion turbine (IPT) to produce additional power. Power production using steam is very similar to power production using combusted gas. The steam is expanded through expansion turbines, driving electric generators to produce of electricity. It may be necessary to use a portion of the produced steam to heat the syngas and/or diluent feed stream to the gas turbine, for injection to the gasification reactor as a temperature moderator, or for addition as diluent to the gas turbine combustor.

After producing steam in the HRSG, the turbine exhaust gas is ready to be discharged through the HRSG stack, but first is passed through a catalyst/absorber unit. The temperature of the exhaust gases at this point is typically in the range of about 121°C (250°F) to about 260°C (500°F). The gas contains 13-15% oxygen, up to about 12% water, and about 4% carbon dioxide. This is in addition to the pollutants, which are NOx gases, primarily NO and NO₂, CO and sulfur dioxide (SO₂). In the catalyst/absorber unit the nitrogen oxides are oxidized to nitrogen dioxide; the carbon monoxides are oxidized to carbon dioxide, and the sulfur dioxide is oxidized to sulfur trioxide (SO₃). This oxidation occurs at temperatures in the range of about 66°C (150°F) to about 218°C (425°F), and more preferably in the range of 80°C (175°F) to about 204°C (400°F), and most preferably in the range of 93°C (200°F) to about 195°C (365°F). The catalyst absorber absorbs the oxidized oxides so that only a small percentage, generally 10% or less of the initial oxide pollutants, pass through the system and are released into the atmosphere.

The catalyst of the catalyst/absorber unit comprises an oxidation catalyst specie disposed on a high surface area support coated with an absorber material. The oxidation catalyst specie is selected from the group of noble metal elements, base metal transitional elements and combinations thereof. More particularly, the oxidation catalyst species are selected from platinum, palladium, rhodium, cobalt, nickel, iron, copper, molybdenum and mixtures thereof, preferably, platinum and rhodium, and most preferably, platinum.

The high surface area support is made of alumina, zirconia, titania, silica or a combination of two or more of these oxides. Preferably, the high surface area support is made of alumina. The high surface area support may be coated on a ceramic or metal matrix structure.

The catalyst material is coated with the absorber material. The absorber material is at least one alkali or alkaline earth compound, which can be hydroxide compound, bicarbonate compound, or carbonate compound, or mixtures of hydroxides and/or bicarbonates and/or carbonated compounds. Preferably, the absorber comprises substantially all carbonate, and most preferably sodium carbonate, potassium carbonate or calcium carbonate. The makeup of the catalyst/absorber system is set forth in U.S. Pat. No. 5,451,558, incorporated herein by reference.

The absorber ceases to be effective when it becomes at least partially saturated with the oxidized oxides. Specifically, when the level of pollutants emanating from the apparatus after contact with the catalyst absorber increases beyond an acceptable level, the absorber is regenerated using syngas from the gasification unit as the regenerating reducing gas. One preferred embodiment of the present invention involves subjecting a slipstream of syngas produced in the gasification reactor to a sweet shift process. The syngas is first processed in an acid gas removal unit to remove H₂S from the syngas. This slipstream is preferably removed from the main syngas stream after being processed in the acid gas removal unit described above. The syngas slipstream is then subjected to a shift reactor, where the carbon monoxide in the syngas is converted to carbon dioxide and hydrogen by way of the water gas shift reaction. COS in the syngas is converted into H₂S and CO₂. The synthesis gas from the gasifier is shifted using steam and a suitable catalyst to form hydrogen as shown below:

H₂O + CO => H₂ + CO₂

H₂O + COS => H₂S +CO₂

Alternatively, the syngas slipstream can be subjected to a sour shift process. In the sweet shift process described above, the syngas is first cleaned in an acid gas removal unit before a slipstream of the syngas is processed in the shift unit. In a sour shift process, the shift unit and the acid gas removal unit are switched. A syngas slipstream is taken from the syngas product of the gasifier and sent directly to a sour shift unit. After being processed in the sour shift unit the shifted syngas slipstream is processed in an acid gas unit. The cleaned sour shifted syngas slipstream can then be sent downstream for final preparations for use as the absorber regen gas, or it can be used to produce a purity hydrogen process. Such hydrogen purification processes are known in the art, and include pressure swing adsorption units and membrane separation units. In these hydrogen purification processes a purified hydrogen stream is removed from the syngas, and the remaining portion of the syngas, primarily comprising CO₂, is then sent downstream for final preparations for use as the absorber regen gas.

The shift process (sweet or sour), also called a water gas shift process or steam reforming, is known in the art. The shift process converts water and carbon monoxide to hydrogen and carbon dioxide. The shift process is described in, for example, U.S. Patent No. 5,472,986, the disclosure of which is incorporated herein by reference. Steam reforming is a process of adding water, or using water contained in the gas, and reacting the resulting gas mixture adiabatically over a steam reforming catalyst. The advantages of steam reforming are both an increase the amount of hydrogen and a reduction in the carbon monoxide in the gas mixture.

The steam reforming catalyst, or shift catalyst, can be one or more Group VIII metals on a heat resistant support. Conventional random packed ceramic supported catalyst pieces, as used for example in secondary reformers, can be used but, since these apply a significant pressure drop to the gas, it is often advantageous to use a monolithic catalyst having through-passages generally parallel to the direction of reactants flow.

The shift reaction is reversible, and lower temperatures favor hydrogen and carbon dioxide formation. However, the reaction rate is slow at low temperatures. Therefore, it is often advantageous to have high temperature and low temperature shift reactions in sequence. The gas temperature in a high temperature shift reaction typically is in the range 350°C to 1050°C. High temperature catalysts are often iron oxide combined with lesser amounts of chromium oxide. Low temperature shift reactors have gas temperatures in the range of about 150°C to 300°C, more typically between about 200°C to 250°C. Low temperature shift catalysts are typically copper oxides that may be supported on zinc oxide and alumina. Steam shifting often is accompanied by efficient heat utilization using, for example, product/reactant heat exchangers or steam generators. Such shift reactors are known to the art.

After being cleaned in the acid gas removal unit and shifted in the shift unit using either the sweet or sour shift process, the syngas is processed in a final sulfur removal unit which removes the remaining H₂S from the syngas. Preferably, the syngas is processed in a zinc oxide bed. After this final sulfur removal step, the syngas is now ready for use as the regeneration gas in the catalyst/absorber unit.

In order to achieve the regeneration the syngas regeneration gas must be contacted with the spent catalyst. Only a portion of the catalyst would need to be regenerated at one time, leaving the remainder to continue to remove the contaminants. Thus catalyst/absorber unit is capable of diverting the exhaust gas from a particular section of the catalyst and to direct the reducing gas thereon. Additionally, the catalyst/absorber allows for the removal of the syngas regeneration gas separately from the turbine exhaust gas exiting the catalyst section. Thus, the HRSG need not be taken off-line to regenerate the catalyst, as simply diverting the turbine exhaust gas to various sections of the catalyst/absorber unit and passing the regeneration gas over the remaining sections allows for on-line regeneration of the catalyst. A process an apparatus for regenerating the catalyst is shown in U.S. Patent No. 5,607,650, incorporated herein by reference.

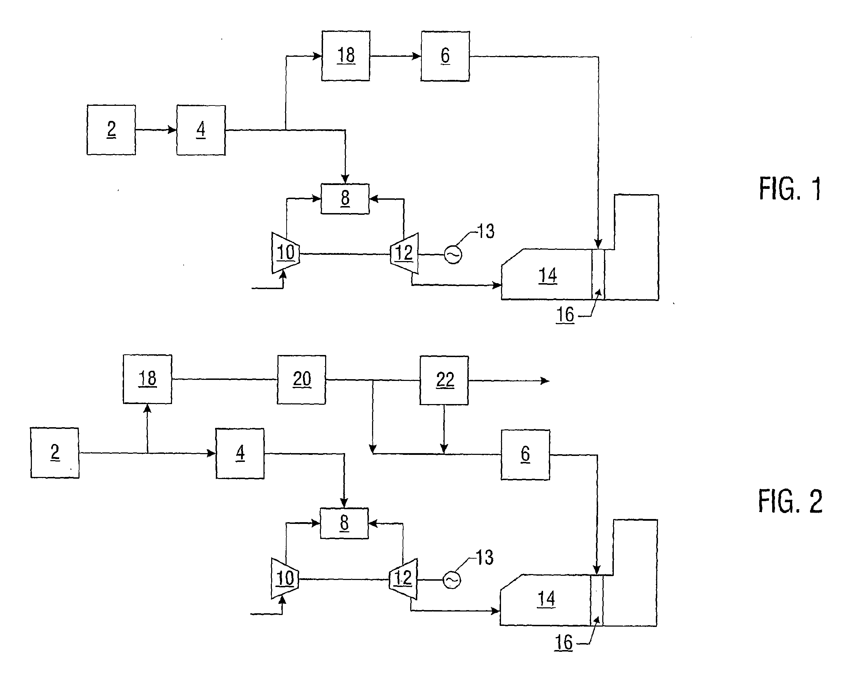

Referring now to FIG. 1, a sweet shift process is shown. Hydrocarbonaceous fuels are gasified in gasification reactor 2, and then sent to acid gas removal unit 4 for cleaning. The main portion of the syngas is then sent to combustor 8 of a gas turbine, where it is combusted along with compressed air from compressor 10. The combustion product is then expanded in expander 12 which produces power in generator 13. The expanded combustion gasses are then sent to heat recovery steam generator 14 where the hot gasses are used to produce steam. The combustion gasses are then passed through absorber 16 where they are cleaned prior to being released into the atmosphere. A syngas slipstream for use as the absorber regen gas is removed from the acid gas removal unit 4 product and sent to shift reactor 18. The syngas slipstream is then processed in a final sulfur removal unit 6, preferably a zinc oxide bed. This cleaned syngas slipstream can then be sent to regenerate absorber 16.

Referring now to FIG. 2, a sour shift process is shown. For simplicity sake, the process units from FIG. 1 have retained their original number. Hydrocarbonaceous fuels are gasified in gasification reactor 2, and then the main portion of the syngas is sent to acid gas removal unit 4 for cleaning. The syngas is then sent to combustor 8 of a gas turbine, where it is combusted along with compressed air from compressor 10. The combustion product is then expanded in expander 12 which produces power in generator 13. The expanded combustion gasses are then sent to heat recovery steam generator 14 where the hot gasses are used to produce steam. The combustion gasses are then passed through absorber 16 where they are cleaned prior to being released into the atmosphere. A syngas slipstream for use as the absorber regen gas is removed from the gasification reactor 2 product and sent to shift reactor 18. The syngas slipstream is then processed in an acid gas removal unit 20. The acid gas removal 20 product can then be sent directly to a final sulfur removal unit 6, preferably a zinc oxide bed. Optionally, the acid gas removal 20 product can first be sent to a hydrogen purification unit 22, and then be sent to the final sulfur removal unit 6. After being processed in the final sulfur removal unit 6, the cleaned syngas slipstream can be sent to regenerate absorber 16.

While the methods of this invention have been described in terms of preferred embodiments, it will be apparent to those of skill in the art that variations may be applied to the process described herein without departing from the scope of the invention as defined by the claims. All such similar substitutes and modifications apparent to those skilled in the art are deemed to be within the scope of the invention.

## Claims

1. A process for removing gaseous pollutants from combustion gases comprising contacting a catalyst absorber with said combustion gases until the catalyst absorber is at least partially saturated,
**characterized in that**
the catalyst absorber is regenerated with a regeneration stream of syngas produced in a gasification unit,
wherein the regeneration stream of syngas is cleaned in an acid gas removal unit to remove a substantial portion of any sulfur components contained therein, and further
wherein the regeneration stream of syngas is passed through a shift reactor either before or after said regeneration stream is cleaned in the acid gas removal unit.

2. The process of claim 1, wherein the catalyst absorber comprises an oxidation catalyst.

3. The process of claim 2, wherein the oxidation catalyst is selected from the group consisting of platinum, palladium, rhodium, cobalt, nickel, iron, copper, molybdenum and combinations thereof.

4. The process of claim 3, wherein the oxidation catalyst is disposed on a high surface area support.

5. The process of claim 4, wherein the high surface area support is selected from the group consisting of alumina, zirconia, titania, silica and combinations thereof.

6. The process of claim 4, wherein the high surface area support is coated on a ceramic or metal matrix structure.

7. The process of claim 3, wherein the oxidation catalyst is coated with an absorber selected from the group consisting of a hydroxide, carbonate, bicarbonate and a mixture thereof of an alkali or alkaline earth and mixtures thereof.

8. The process of claim 1, wherein the shift reactor comprises shift catalyst.

9. The process of claim 8, wherein the shift catalyst converts at least a portion of any carbon monoxide contained in the syngas to hydrogen and carbon dioxide.

10. The process of claim 8, wherein the shift catalyst converts at least a portion of any carbonyl sulfide contained in the syngas to hydrogen sulfide and carbon dioxide.

11. The process of claim 1, wherein the syngas is passed through a hydrogen sulfide removal unit, the hydrogen sulfide removal unit removing at least a portion of any hydrogen sulfide contained in the syngas.

12. The process of claim 11, wherein the hydrogen sulfide removal unit comprises a zinc oxide bed.

13. The process of claim 1, wherein a portion of the syngas is combusted so as to produce power in a combustion turbine generator, thereby producing the combustion gases.

14. The process of claim 13, wherein the combustion exhaust gases are cooled in a heat recovery steam generator.

15. The process of claim 14 wherein the catalyst absorber is located within the heat recovery steam generator.

16. The process of claim 15, wherein the heat recovery steam generator is not taken out of service while the catalyst absorber is being regenerated.

17. The process in accordance with claim 1, wherein the catalyst absorber comprises an oxidation catalyst selected from the group consisting of platinum, palladium, rhodium, cobalt, nickel, iron, copper, molybdenum and combinations thereof, the oxidation catalyst being disposed on a high surface area support selected from the group consisting of alumina, zirconia, titania, silica and combinations thereof, the high surface area support being coated on a ceramic or metal matrix structure, and the oxidation catalyst being coated with an absorber selected from the group consisting of a hydroxide, carbonate, bicarbonate and a mixture thereof of an alkali or alkaline earth and mixtures thereof; and
wherein the shift reactor contains shift catalyst for conversion of at least a portion of any carbon monoxide contained in the syngas to hydrogen and carbon dioxide and conversion of at least a portion of any carbonyl sulfide contained in the syngas to hydrogen sulfide and carbon dioxide, the syngas then being processed in a zinc oxide bed.

18. The process of claim 16, wherein a portion of the syngas is combusted so as to produce power in a combustion turbine generator, thereby producing the combustion gases.

## Patentansprüche

1. Verfahren zum Entfernen von gasförmigen Verunreinigungen aus Verbrennungsgasen, umfassend Zusammenbringen eines Katalysator-Absorbers mit den Verbrennungsgasen bis der Katalysator-Absorber zumindest teilweise gesättigt ist,
**dadurch gekennzeichnet, dass**
der Katalysator-Absorber durch einen Regenerationsstrom aus Syngas, das in einer Vergasungseinheit hergestellt wird, regeneriert wird,
wobei der Regenerationsstrom aus Syngas in einer Säuregas-Entfernungseinheit gereinigt wird, um einen wesentlichen Teil darin enthaltener Schwefelkomponenten zu entfernen, und zudem
wobei der Regenerationsstrom aus Syngas durch einen Shift-Reaktor fließt, entweder bevor oder nachdem der Regenerationsstrom in der Säuregas-Entfernungseinheit gereinigt wird.

2. Verfahren gemäß Anspruch 1, wobei der Katalysator-Absorber einen Oxidationskatalysator enthält.

3. Verfahren gemäß Anspruch 2, wobei der Oxidationskatalysator ausgewählt ist aus der Gruppe Platin, Palladium, Rhodium, Cobalt, Nickel, Eisen, Kupfer, Molybdän und Kombinationen davon.

4. Verfahren gemäß Anspruch 3, wobei der Oxidationskatalysator auf einem Substrat mit hoher Oberfläche angeordnet ist.

5. Verfahren gemäß Anspruch 4, wobei das Substrat mit hoher Oberfläche ausgewählt ist aus der Gruppe Aluminiumoxid, Zirconiumdioxid, Titandioxid, Siliciumdioxid und Kombinationen davon.

6. Verfahren gemäß Anspruch 4, wobei das Substrat mit hoher Oberfläche mit einer Keramik- oder Metallmatrixstruktur beschichtet ist.

7. Verfahren gemäß Anspruch 3, wobei der Oxidationskatalysator mit einem Absorber beschichtet ist, ausgewählt aus der Gruppe Hydroxid, Carbonat, Bicarbonat und eine Mischung davon, jeweils eines Alkalimetalls oder Alkalierdmetalls und Mischungen davon.

8. Verfahren gemäß Anspruch 1, wobei der Shift-Reaktor einen Shift-Katalysator aufweist.

9. Verfahren gemäß Anspruch 8, wobei der Shift-Katalysator zumindest einen Teil von im Syngas enthaltenem Kohlenstoffmonoxid in Wasserstoff und Kohlenstoffdioxid umwandelt.

10. Verfahren gemäß Anspruch 8, wobei der Shift-Katalysator zumindest einen Teil von im Syngas enthaltenem Carbonylsulfid in Wasserstoffsulfid und Kohlenstoffdioxid umwandelt.

11. Verfahren gemäß Anspruch 1, wobei das Syngas durch eine Wasserstoffsulfid-Entfernungseinheit fließt, wobei die Wasserstoffsulfid-Entfernungseinheit zumindest einen Teil von im Syngas enthaltenem Wasserstoffsulfid entfernt.

12. Verfahren gemäß Anspruch 11, wobei die Wasserstoffsulfid-Entfernungseinheit ein Zinkoxidbett aufweist.

13. Verfahren gemäß Anspruch 1, wobei ein Teil des Syngases verbrannt wird, so dass in einem Verbrennungsturbinengenerator Energie gewonnen wird und so die Verbrennungsgase hergestellt werden.

14. Verfahren gemäß Anspruch 13, wobei die Verbrennungsabgase in einem Wärmenutzungsdampfgenerator gekühlt werden.

15. Verfahren gemäß Anspruch 14, wobei der Katalysator-Absorber sich in dem Wärmenutzungsdampfgenerator befindet.

16. Verfahren gemäß Anspruch 15, wobei der Wärmenutzungsdampfgenerator bei der Regeneration des Katalysator-Absorbers nicht aus dem Betrieb genommen wird.

17. Verfahren gemäß Anspruch 1, wobei der Katalysator-Absorber einen Oxidationskatalysator aufweist, ausgewählt aus der Gruppe Platin, Palladium, Rhodium, Cobalt, Nickel, Eisen, Kupfer, Molybdän und Kombinationen davon,
wobei der Oxidationskatalysator auf einem Substrat mit hoher Oberfläche angeordnet ist, ausgewählt aus der Gruppe Aluminiumoxid, Zirconiumdioxid, Titandioxid, Siliciumdioxid und Kombinationen davon, wobei das Substrat mit hoher Oberfläche mit einer Keramik- oder Metallmatrixstruktur beschichtet ist, und wobei der Oxidationskatalysator mit einem Absorber beschichtet ist, ausgewählt aus der Gruppe Hydroxid, Carbonat, Bicarbonat und Mischungen davon, jeweils eines Alkalimetalls oder Alkalierdmetalls und Mischungen davon; und
wobei der Shift-Reaktor einen Katalysator aufweist für die Umwandlung von zumindest einem Teil von im Syngas enthaltenen Kohlenstoffmonoxid in Wasserstoff und Kohlenstoffdioxid und Umwandlung von zumindest einem Teil von im Syngas enthaltenen Carbonylsulfid in Wasserstoffsulfid und Kohlenstoffdioxid, und wobei das Syngas dann in einem Zinkoxidbett verarbeitet wird.

18. Verfahren gemäß Anspruch 16, wobei ein Teil des Syngases verbrannt wird, so dass in einem Verbrennungsturbinengenerator Energie gewonnen wird, und so die Verbrennungsgase hergestellt werden.

## Revendications

1. Procédé permettant d'éliminer les polluants gazeux de gaz de combustion comprenant la mise en contact d'un absorbeur catalytique avec lesdits gaz de combustion jusqu'à ce que l'absorbeur catalytique soit au moins partiellement saturé,
**caractérisé en ce que**
l'absorbeur catalytique est régénéré avec un courant de régénération de gaz de synthèse produit dans une unité de gazéification,
dans lequel le courant de régénération de gaz de synthèse est purifié dans une unité d'élimination de gaz acide pour éliminer une partie importante des composants soufrés contenus dedans, et en outre
dans lequel le courant de régénération de gaz de synthèse est passé à travers un réacteur de conversion avant ou après la purification dudit courant de régénération dans l'unité d'élimination de gaz acide.

2. Procédé selon la revendication 1, dans lequel l'absorbeur catalytique comprend un catalyseur d'oxydation.

3. Procédé selon la revendication 2, dans lequel le catalyseur d'oxydation est choisi dans le groupe constitué par le platine, le palladium, le rhodium, le cobalt, le nickel, le fer, le cuivre, le molybdène et leurs combinaisons.

4. Procédé selon la revendication 3, dans lequel le catalyseur d'oxydation est disposé sur un support à surface élevée.

5. Procédé selon la revendication 4, dans lequel le support à surface élevée est choisi dans le groupe constitué par l'alumine, la zircone, l'oxyde de titane, la silice et leurs combinaisons.

6. Procédé selon la revendication 4, dans lequel le support à surface élevée est enduit sur une structure matricielle en céramique ou en métal.

7. Procédé selon la revendication 3, dans lequel le catalyseur d'oxydation est enduit avec un absorbeur choisi dans le groupe constitué par un hydroxyde, un carbonate, un bicarbonate, et leurs mélanges, d'alcalin ou d'alcalino-terreux et leurs mélanges.

8. Procédé selon la revendication 1, dans lequel le réacteur de conversion comprend un catalyseur de conversion.

9. Procédé selon la revendication 8, dans lequel le catalyseur de conversion convertit au moins une partie du monoxyde de carbone contenu dans le gaz de synthèse en hydrogène et en dioxyde de carbone.

10. Procédé selon la revendication 8, dans lequel le catalyseur de conversion convertit au moins une partie du sulfure de carbonyle contenu dans le gaz de synthèse en sulfure d'hydrogène et en dioxyde de carbone.

11. Procédé selon la revendication 1, dans lequel le gaz de synthèse est passé par une unité d'élimination de sulfure d'hydrogène, l'unité d'élimination de sulfure d'hydrogène éliminant au moins une partie du sulfure d'hydrogène contenu dans le gaz de synthèse.

12. Procédé selon la revendication 11, dans lequel l'unité d'élimination de sulfure d'hydrogène comprend un lit d'oxyde de zinc.

13. Procédé selon la revendication 1, dans lequel une partie du gaz de synthèse est brûlée afin de produire de l'énergie dans un générateur à turbine à combustion, ce qui produit ainsi les gaz de combustion.

14. Procédé selon la revendication 13, dans lequel les gaz d'échappement de combustion sont refroidis dans un générateur de vapeur à récupération de chaleur.

15. Procédé selon la revendication 14, dans lequel l'absorbeur catalytique est situé à l'intérieur du générateur de vapeur à récupération de chaleur.

16. Procédé selon la revendication 15, dans lequel le générateur de vapeur à récupération de chaleur n'est pas mis hors service quand l'absorbeur catalytique est en cours de régénération.

17. Procédé selon la revendication 1, dans lequel l'absorbeur catalytique comprend un catalyseur d'oxydation choisi dans le groupe constitué par le platine, le palladium, le rhodium, le cobalt, le nickel, le fer, le cuivre, le molybdène et leurs combinaisons, le catalyseur d'oxydation étant disposé sur un support à surface élevée choisi dans le groupe constitué par l'alumine, la zircone, l'oxyde de titane, la silice et leurs combinaisons, le support à surface élevée étant enduit sur une structure matricielle en céramique ou en métal, et le catalyseur d'oxydation étant enduit avec un absorbeur choisi dans le groupe constitué par un hydroxyde, un carbonate, un bicarbonate et leurs mélanges d'alcalin ou d'alcalino-terreux et leurs mélanges ; et
dans lequel le réacteur de conversion contient un catalyseur de conversion pour convertir au moins une partie du monoxyde de carbone contenu dans le gaz de synthèse en hydrogène et en dioxyde de carbone et convertir au moins une partie du sulfure de carbonyle contenu dans le gaz de synthèse en sulfure d'hydrogène et en dioxyde de carbone, le gaz de synthèse étant traité dans un lit d'oxyde de zinc.

18. Procédé selon la revendication 16, dans lequel une partie du gaz de synthèse est brûlée de manière à produire de l'énergie dans un générateur à turbine à combustion, ce qui produit ainsi les gaz de combustion.
